# EUROPÄISCHE PATENTSCHRIFT

(11) **EP 0 522 298 B1**
(45) Veröffentlichungstag und Bekanntmachung des Hinweises auf die Patenterteilung: **30.08.1995**
(21) Anmeldenummer: 92109748.1
(22) Anmeldetag: 10.06.1992
(51) Int. Cl.: G03B 21/58

(54) **Lichtbildwand mit Gehäusekasten und Halteeinrichtung**
Projection screen with casing and retaining device
Ecran de projection avec boîtier et support

(30) Priorität: 08.07.1991 DE 9108403 U
(43) Veröffentlichungstag der Anmeldung: 13.01.1993
(73) Patentinhaber: MECHANISCHE WEBEREI GMBH & CO., D-33175 Bad Lippspringe (DE)
(72) Erfinder: Sperber, Georg, W-4792 Bad Lippspringe (DE)
(74) Vertreter: Patentanwälte Dipl.-Ing. Bodo Thielking Dipl.-Ing. Otto Elbertzhagen

(56) Entgegenhaltungen:
- DE-A- 3 844 171

## Beschreibung

Die Erfindung betrifft eine Lichtbildwand mit Gehäusekasten und Halteeinrichtung.

Es ist bekannt, die Gehäusekästen für Lichtbildwände mit Hilfe spezieller, an die Einbausituation angepaßter Haltevorrichtungen zu befestigen, beispielsweise mit Hilfe von Wandkonsolen.

Eine andere Möglichkeit zur Befestigung mittels direkt am Gehäusekasten angeformten Befestigungsprofilen zeigt z.B. die DE-A-3844171.

Der Erfindung liegt die Aufgabe zugrunde, eine Lichtbildwand der als bekannt vorausgesetzten Art so auszubilden, daß eine einfache Befestigung des Gehäusekastens an einer ortsfest vormontierten Haltevorrichtung möglich ist. Dabei soll die Haltevorrichtung für unterschiedliche Einbausituationen geeignet sein.

Die Lösung dieser Aufgabe erfolgt erfindungsgemäß dadurch, daß der durch ein die lichtbildwandenthaltendes Grundprofil gebildete Gehäusekasten an seiner Oberseite jeweils über einen Steg mit dem Grundprofil verbundene, angeformte Längsleistenbereiche aufweist, die von Gegenstücken der als Winkelprofil ausgebildeten, ortsfest montierbaren Halteeinrichtung untergriffen werden, wobei die Längsleistenbereiche und die Gegenstücke in der Montageposition festlegbar sind.

Bei einer bevorzugten Ausführungsform der Erfindung verlaufen die Längsleistenbereiche parallel zur Oberseite des Grundprofils und die Gegenstücke sind als parallel hierzu und parallel zu einem Schenkel der Winkelprofils verlaufende Hakenbereiche ausgebildet.

Bei einer besonders bevorzugten Ausführungsform weisen die Längsleistenbereiche mit den zugehörigen Stegen ein T-Profil auf. Es hat sich als zweckmäßig erwiesen, daß das Winkelprofil eine Befestigungsschraube aufweist, welche in der Montagelage an einem Längsleistenbereich des Gehäusekastens anliegt.

Die Schraube ist dabei am freien Ende des horizontalen Schenkels des Winkelprofils angeordnet.

Die erfindungsgemäße Lichtbildwand erlaubt eine einfache Vormontage in unterschiedlichen Einbausituationen, beispielsweise für eine Deckenmontage, für eine Wandmontage oder auch für eine Nischenmontage. Dabei kann die Halteeinrichtung entweder aus einem durchgehenden Winkelprofil bestehen, das parallel zu dem Gehäusekasten verläuft oder aus Winkelstücken, die in wählbaren Abständen anzuordnen sind. Die Montage der Winkelstücke erfolgt in der gewünschten Einbausituation beispielsweise mit Hilfe von Befestigungsschrauben. Wenn die Winkelstücke sicher an einer Wand oder Decke befestigt sind, kann nachträglich das Einhängen des Gehäusekastens bzw. der daran angeformten Längsleistenbereiche in im Winkelprofil vorhandene Hakenbereich erfolgen. Hierzu wird der Gehäusekasten mit einem gewissen Abstand von dem rückseitigen Schenkel des Winkelprofils angehoben und dann horizontal nach hinten verschoben, bis die angeformten Längsleistenbereiche des Grundprofils von den ortsfesten Hakenbereichen untergriffen werden. In dieser Position ist dann eine Sicherung mit Hilfe einer Befestigungsschraube möglich. Die Halterung ist universell für die unterschiedlichsten Einbausituationen geeignet.

Nachstehend wird eine bevorzugte Ausführungsform der Erfindung anhand der Zeichnung im einzelnen beschrieben. Es zeigen:

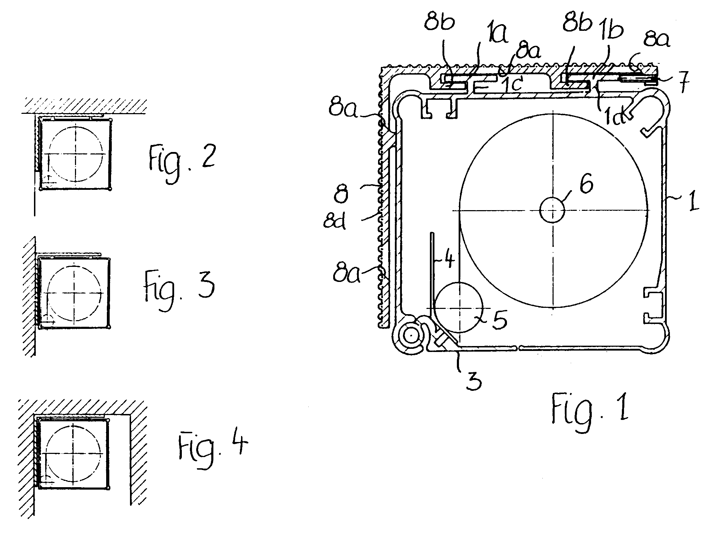

- Figur 1 -: einen Querschnitt durch den Gehäusekasten mit Winkelstück,
- Figur 2 -: die Einbausituation bei Deckenmontage,
- Figur 3 -: die Einbausituation bei Wandmontage,
- Figur 4 -: die Einbausituation bei Nischenmontage.

Das Grundprofil 1 des Gehäusekastens ist ein Aluminiumprofil. Es besitzt an seiner Oberseite zwei Längsleistenbereiche 1a und 1b, die mit der Oberseite über Stege 1c verbunden sind. Im Gehäuse ist eine Abdeckklappe 3 schwenkbar gelagert. An der Abdeckklappe 3 ist ein Mitnehmer 4 befestigt. Ein Beschwerungsrohr 5 liegt in der dargestellten Ausführungsform so an dem Mitnehmer 4 an, daß die Klappe 3 geschlossen ist. Mit 6 ist die Wickelwelle der Lichtbildwand bezeichnet.

Die Halteeinrichtung wird von einem Winkelprofil 8 gebildet, das an seinen vom Gehäusekasten abgewandten Rückseiten eine parallel zur Längsachse des Gehäusekastens geriffelte Profilierung 8d aufweist. Durchgangslöcher 8a dienen zur Aufnahme der Köpfe der nicht dargestellten Befestigungsschrauben. An der Unterseite des horizontalen Schenkels des Winkelstücks 8 sind zwei hakenförmige Bereiche 8b ausgebildet, die sich parallel zu den Längsleistenbereichen 1a und 1b erstrecken und diese haltend untergreifen. Eine Befestigungsschraube 7, die als Madenschraube ausgebildet ist, arretiert den Gehäusekasten 1 in der Einbauposition.

Durch die T-förmige Gestaltung der Längsleistenbereiche 1a und 1b kann der Gehäusekasten 1 von unterschiedlichen Seiten montiert werden.

## Patentansprüche

1. Lichtbildwand mit Gehäusekasten und Halteeinrichtung,
dadurch gekennzeichnet,
daß der durch ein die lichtbildwandenthaltendes Grundprofil (1) gebildete Gehäusekasten (1) an seiner Oberseite jeweils über einen Steg (1c; 1d) mit dem Grundprofil (1) verbundene angeformte Längsleistenbereiche (1a; 1b) aufweist, die von Gegenstücken (8b) der als Winkelprofil (8) ausgebildeten, ortsfest montierbaren Halteeinrichtung untergriffen werden, wobei die Längsleistenbereiche (1a; 1b) und die Gegenstücke (8b) in der Montageposition festlegbar sind.

2. Lichtbildwand nach Anspruch 1,
dadurch gekennzeichnet,
daß die Längsleistenbereiche (1a; 1b) parallel zur Oberseite des Grundprofils (1) verlaufen und die Gegenstücke (8b) als parallel hierzu und parallel zu einem Schenkel des Winkelprofils (8) verlaufende Hakenbereiche ausgebildet sind.

3. Lichtbildwand nach Anspruch 1 oder 2,
dadurch gekennzeichnet,
daß die Längsleistenbereiche (1a; 1b) mit den zugehörigen Stegen (1c; 1d) ein T-Profil aufweisen.

4. Lichtbildwand nach einem oder mehreren der Ansprüche 1 bis 3,
dadurch gekennzeichnet,
daß das Winkelprofil (8) eine Befestigungsschraube (7) aufweist, welche in der Montagelage an einem Längsleistenbereich (1b) des Gehäusekastens anliegt.

5. Lichtbildwand nach Anspruch 4,
dadurch gekennzeichnet,
daß die Schraube am freien Ende des horizontalen Schenkels des Winkelprofils (8) angeordnet ist.

6. Lichtbildwand nach einem oder mehreren der Ansprüche 1 bis 5,
dadurch gekennzeichnet,
daß das Winkelprofil (8) an seinen vom Gehäusekasten (1) abgewandten Rückseiten eine parallel zur Längsachse des Gehäusekastens (1) geriffelte Profilierung (8d) aufweist.

## Claims

1. Projection screen with box housing and holding device characterised in that the box housing (1) formed by a profiled base section (1) containing the screen wall has on its top side moulded-on longitudinal strip areas (1a;1b) each connected by a web (1c;1d) to the base section (1) and engaged underneath by counter members (8b) of the holding device which is designed as a profiled angled section (8) which can be mounted locally fixed wherein the longitudinal strip areas (1a;1b) and the counter members (8b) are fixable in the assembly position.

2. Screen according to claim 1 characterised in that the longitudinal strip areas (1a;1b) run parallel to the top side of the base section (1) and the counter members (8b) are formed as hook areas running parallel to same and parallel to an arm of the angled section (8).

3. Screen according to claim 1 or 2 characterised in that the longitudinal strip areas (1a;1b) with the associated webs (1c;1d) have a T-section.

4. Screen according to one or more of claims 1 to 3 characterised in that the angled section (8) has a fixing screw (7) which in the assembled position adjoins a longitudinal strip area (1b).

5. Screen according to claim 4 characterised in that the screw is mounted at the free end of the horizontal arm of the angled profiled section (8).

6. Screen according to one or more of claims 1 to 5 characterised in that the angled profiled section (8) has at the back remote from the box housing (1) a profiled area (8d) ribbed parallel to the longitudinal axis of the housing box (1).

## Revendications

1. Ecran de projection avec boîtier et support,
caractérisé en ce que
le boitier (1), formé par un profilé de base (1) contenant l'écran de projection, présente, sur son côté supérieur, des secteurs de barre longitudinale (1a; 1b) reliés chacun au profilé de base (1) par des languettes (1c; 1d) et saisis, par dessous, par des contre-pièces (8b) équipant le support conçu sous forme de profilé angulaire (8) et monté stationnairement, les secteurs de barre longitudinale (1a, 1b) et les contre-pièces (8b) pouvant être fixées en position de montage.

2. Ecran de projection selon la revendication 1,
caractérisé en ce que
les secteurs de barre longitudinale (1a; 1b) s'étendent parallèlement au côté supérieur du profilé de base et que les contre-pièces, sous forme de secteurs crochus, sont disposées parallèlement par rapport à ceux-ci et par rapport à une branche du profilé angulaire (8).

3. Ecran de projection selon la revendication 1 ou 2,
caractérisé en ce que
les secteurs de barre longitudinale (1a; 1b) présentent, avec les languettes (1c; 1d) un profil en T.

4. Ecran de projection selon l'une des revendications 1 à 3,
caractérisé en ce que
le profilé angulaire (8) présente une vis de fixation (7) qui, en position de montage, porte contre un secteur de barre longitudinal (1b) du boîtier.

5. Ecran de projection selon la revendication 4,
caractérisé en ce que
la vis est disposée à l'extrémité libre de la branche horizontale du profilé angulaire (8).

6. Ecran de projection selon une ou plusieurs revendications 1 à 5,
caractérisé en ce que
le côté arrière du profilé angulaire (8), opposé au boîtier, présente un profilé cannelé (8a parallèle à l'écran longitudinal du boîtier (1).
